# EUROPÄISCHE PATENTSCHRIFT

(11) **EP 1 999 396 B1**
(45) Veröffentlichungstag und Bekanntmachung des Hinweises auf die Patenterteilung: **11.01.2012**
(21) Anmeldenummer: 07723309.6
(22) Anmeldetag: 16.03.2007
(51) Int. Cl.: F16G 13/16, H02G 11/00

(54) **VERZUGSFREIES KETTENGLIED**
NON-WARPING CHAIN LINK
MAILLON DE CHAINE INDEFORMABLE

(30) Priorität: 24.03.2006 DE 102006013682
(43) Veröffentlichungstag der Anmeldung: 10.12.2008
(73) Patentinhaber: Kabelschlepp GmbH, 57482 Wenden-Gerlingen (DE)
(72) Erfinder: BENSBERG, Jochen, 57271 Hilchenbach (DE); SAMEN, Heiner, 51709 Marienheide (DE); SCHULZ, Jörg, 51766 Engelskirchen (DE)
(74) Vertreter: Neumann, Ditmar
(86) Internationale Anmeldenummer: PCT/EP2007/002328
(87) Internationale Veröffentlichungsnummer: WO 2007/110160

(56) Entgegenhaltungen:
- WO-A-2005/108820
- DE-A1- 19 645 403
- DE-A1- 19 710 663
- DE-A1- 19 739 782
- DE-C1- 10 115 566

## Beschreibung

Der Gegenstand der Erfindung bezieht sich auf ein Kettenglied einer Energieführungskette sowie auf eine Energieführungskette zur Führung von Kabeln, Leitungen, Schläuchen oder dergleichen.

Zum Führen von Kabeln, Leitungen, Schläuchen oder dergleichen zwischen einem ortsfesten und einem beweglichen Anschlusspunkt werden sogenannte Energieftihrungsketten verwendet. Die Energieführungskette ist gebildet durch eine Mehrzahl von Kettengliedern. Die Kettenglieder sind gelenkig miteinander verbunden. Jedes Kettenglied weist zwei Laschen auf. Die Laschen sind durch wenigstens einen Quersteg miteinander verbunden. Die Laschen und die Querstege bilden einen Kanal, in dem die Leitungen, Kabel, Schläuche oder dergleichen geordnet sind.

Die Ausbildung der Kettenglieder kann unterschiedlich sein. Es sind Kettenglieder bekannt, bei denen die Querstege lösbar mit den Laschen verbunden sind. Durch Variation der Länge der Querstege kann die Breite der Energiefiihrungskette an die Anforderungen angepasst werden.

Durch die WO 98/22728 ist ein Kettenglied bekannt, welches aus Kunststoff hergestellt ist. Das Kettenglied weist zwei beabstandet zueinander angeordnete Laschen auf. Die Laschen sind mit einem Quersteg verbunden, wobei die Laschen und der eine Quersteg einen U-förmigen Körper bilden. Ein weiterer Quersteg ist lösbar mit wenigstens einer Lasche verbunden, so dass durch Öffnen des Querstegs Leitungen in das Kettenglied eingebracht werden können.

Aus der WO 2005/108820 A1 ist ebenfalls ein einstückiges Kettenglied mit zwei Laschen und einem Quersteg aus einem Elastomer bekannt.

Problematisch bei einem solchen Kettenglied ist, dass es fertigungstechnisch bedingt zu Winkelabweichungen der Laschen kommen kann, die zu einer verringerten lichten Innenhöhe führen. Dies wiederum kann dazu führen, dass das Verschließen des Kettengliedes problematisch sein kann. Darüber hinaus kann es durch Druckkräfte, die auf die Verbindungen zwischen den Laschen und dem lösbaren Quersteg wirken, zu einer Beeinträchtigung der Funktionalität der Verbindung kommen.

Hiervon ausgehend liegt der vorliegenden Erfindung die Aufgabe zugrunde, die Fertigungstoleranzen zu verringern.

Diese Aufgabe wird erfindungsgemäß durch ein Kettenglied einer Energieführungskette zur Führung von Kabeln, Leitungen, Schläuchen und dergleichen mit den Merkmalen des Anspruchs 1 gelöst. Vorteilhafte Weiterbildungen und Ausgestaltungen des Kettengliedes sind Gegenstand der abhängigen Ansprüche.

Das erfindungsgemäße Kettenglied einer Energieführungskette zur Führung von Kabeln, Leitungen, Schläuchen und dergleichen zwischen einem ortsfesten und einem beweglichen Anschlusspunkt weist zwei beabstandet zueinander angeordnete Laschen und wenigstens einen über einen Verbindungsbereich die Laschen verbindenden Quersteg auf. Die Laschen und der Quersteg sind einstückig aus einem Kunststoff hergestellt. Nach dem erfindungsgemäßen Vorschlag weist wenigstens eine Lasche wenigstens eine Ausnehmung auf, welche in dem Verbindungsbereich ausgebildet ist.

Durch diese Maßnahme werden die Fertigungstoleranzen verringert. Insbesondere wird eine höhere Winkelgenauigkeit der Laschen im Hinblick auf den Quersteg erreicht, so dass eine im Wesentlichen konstante lichte Innenhöhe innerhalb des Kettengliedes erreicht wird.

Die Ausnehmung kann beispielsweise durch entsprechende Wechseleinsätze in einem Werkzeug ausgebildet werden. Dies bedeutet, dass keine separaten Werkzeuge notwendig sind, um beispielsweise eine offene und/oder geschlossene Version des Kettengliedes herstellen zu können. Ein weiterer Vorteil des erfindungsgemäßen Kettengliedes kann darin gesehen werden, dass eine kostenaufwendige Schrägstellung der Seitenlaschen im Werkzeug nicht notwendig ist. Insbesondere kann durch den Austausch der Wechseleinsätze die Gestalt und die Tiefe der Ausnehmung in Abhängigkeit von dem verwendeten Kunststoff variiert werden, so dass die Ausnehmung an das Ausgangsmaterial angepasst werden kann.

Bedingt durch die erfindungsgemäße Herstellung des Kettengliedes wird auch auf aufwendige nachfolgende Behandlungen eines Kettengliedes verzichtet.

Vorzugsweise ist die wenigstens eine Ausnehmung in der Außenseite der wenigstens einen Lasche ausgebildet. Hierdurch wird eine vereinfachte Herstellung des Kettengliedes erreicht. Alternativ kann die Ausnehmung in der Innenseite der wenigstens einen Lasche ausgebildet sein.

In Abhängigkeit von der Größe des Kettengliedes kann es zweckmäßig sein, Ausnehmungen sowohl an der Innen- als auch an der Außenseite vorzusehen, um die Fertigungstoleranzen weiter zu verringern.

Ist eine Ausnehmung in der Innenseite der wenigstens einen Lasche vorgesehen, so ist vorzugsweise die Ausnehmung so ausgebildet, dass der Rand der Ausnehmung den Verbindungsbereich wenigstens teilweise umgibt.

Überraschenderweise hat sich herausgestellt, dass bei einer Wahl des Verhältnisses zwischen der wenigstens einen Ausnehmung und der Laschendicke ein Verzug reduziert werden kann. Die Ausnehmung beträgt im Verhältnis zur Laschendicke mindestens 30 % und höchstens 80 %. Besonders bevorzugt ist ein Verhältnis von 50 %.Hierbei kann eine Ausnehmung sowohl an der Außenseite als auch eine Ausnehmung in der Innenseite der Lasche vorgesehen sein. Bei der Ausgestaltung der Ausnehmung ist es nicht zwingend notwendig, dass die Ausnehmung eine Kontur oder eine Fläche aufweist, die der Kontur des Querstegs oder der Querstegsfläche des Querstegs entspricht. Die Ausnehmung, insbesondere in der Außenseite der Lasche kann eine Fläche aufweisen, die kleiner oder größer ist als die Querschnittsfläche des Querstegs. Sie kann dem Quersteg entsprechen.

Gemäß einer noch weiteren vorteilhaften Ausgestaltung der Erfindung wird vorgeschlagen, dass die Ausnehmung im Wesentlichen dreieckförmig ausgebildet ist. Hierbei liegt die Basis der dreieckförmigen Ausnehmung im Wesentlichen parallel zum Quersteg.

Gemäß einem weiteren erfinderischen Gedanken wird ein Kettenglied einer Energieführungskette zur Führung von Kabeln, Leitungen, Schläuchen und dergleichen zwischen einem ortsfesten und einem beweglichen Anschlusspunkt vorgeschlagen, wobei das Kettenglied einstückig aus einem Kunststoff durch zwei beabstandet zueinander angeordnete Laschen und wenigstens einen über einen Verbindungsbereich die Laschen verbindenden Quersteg gebildet ist, wobei wenigstens eine Lasche wenigstens einen Vorsprung aufweist, welcher auf der Außenseite der Lasche und im Wesentlichen gegenüberliegend dem Quersteg ausgebildet ist. Durch diesen Vorsprung wird das Verhalten des Kettengliedes während der Abkühlung positiv beeinflusst in dem Sinne, dass die Winkelgenauigkeit erhöht wird.

Ein Kettenglied gemäß diesem weiteren erfinderischen Gedanken wird in Anspruch 6 beansprucht.

Die Länge des Vorsprungs ist vorzugsweise kleiner als die Länge des Querstegs. Das Verhältnis der Länge des Vorsprungs zur Laschendicke beträgt mindestens 20 % und höchstens 70 %. Bei einer solchen Ausgestaltung des erfindungsgemäßen Kettengliedes wird ein im Wesentlichen konstanter Nutzungsquerschnitt innerhalb des Kettengliedes erreicht.

Weitere Einzelheiten und Vorteile der Erfindung werden anhand der in der Zeichnungen dargestellten Ausführungsbeispiele erläutert, ohne dass der Gegenstand der Erfindung auf diese konkreten Ausführungsbeispiele beschränkt wird.

Es zeigen:
- Fig. 1: ein Ausführungsbeispiel eines Kettengliedes in einer Vorderansicht,
- Fig. 2: das Kettenglied in einer Seitenansicht und im Schnitt entlang der Schnittlinie A-A nach Fig. 1,
- Fig. 3: ein zweites Ausführungsbeispiel eines Kettengliedes in der Vorderansicht und
- Fig. 4: das Kettenglied nach Fig. 3 in einer Schnittansicht entlang der Schnittlinie B-B und in einer Seitenansicht.

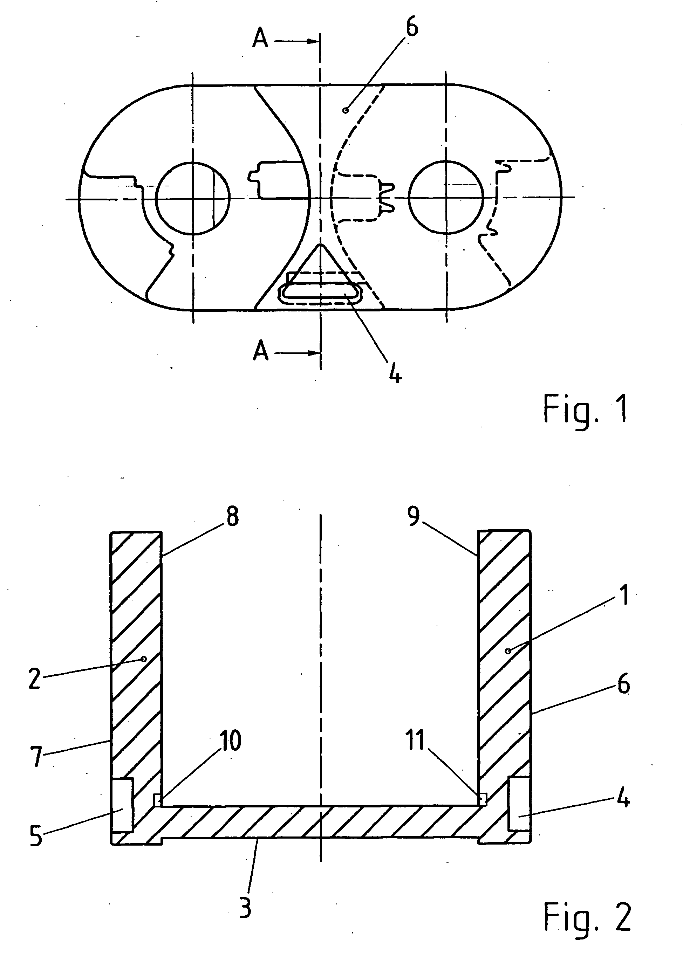

In den Figuren 1 und 2 ist ein erstes Ausführungsbeispiel eines Kettengliedes einer Energieführungskette zur Führung von Kabeln, Leitungen, Schläuchen oder dergleichen zwischen einem ortsfesten und einem beweglichen Anschlußpunkt dargestellt. Das Kettenglied ist gebildet durch zwei beabstandet zueinander angeordnete Laschen 1 und 2, welche durch einen Quersteg 3 miteinander verbunden sind. Die Laschen 1, 2 und der Quersteg 3 bilden eine Einheit, die einstückig aus einem Kunststoff hergestellt ist. Es ist nicht zwingend notwendig, dass ein einheitlicher Kunststoff sowohl für die Laschen als auch für den Quersteg verwendet wird. Es besteht auch die Möglichkeit, dass die Seitenlaschen wenigstens teilweise aus einem ersten Kunststoff gebildet sind, während der Quersteg aus einem zweiten Kunststoff gebildet ist.

Zum Verschließen des Kettengliedes ist ein nicht dargestellter Quersteg vorgesehen, der lösbar wenigstens mit einer Seitenlasche verbunden ist

Jede Lasche weist einen ersten Bereich auf, in dem ein Gelenkbolzen ausgebildet ist. In einem dem ersten Bereich gegenüberliegenden zweiten Bereich ist eine Gelenkaufnahme vorgesehen. Die Gelenkaufnahme und der Gelenkbolzen sind so gebildet, dass Laschen benachbarter Glieder miteinander verbunden werden können. Hierbei greifen die Gelenkbolzen in die entsprechenden Gelenkaufnahmen der Laschen eines benachbarten Gliedes ein.

Zur Beschränkung der Verschwenkbeweglichkeit zweier benachbarter Kettenglieder sind in den Bereichen Anschlagflächen vorgesehen, die miteinander zusammenwirken.

In dem dargestellten Ausführungsbeispiel weist jede Lasche eine Ausnehmung 4, 5 auf, welche benachbart zum Verbindungsbereich zwischen einer Lasche 2, 3 und dem Quersteg 4 vorgesehen ist. Die Ausnehmungen sind an der Außenseite 6 bzw. 7 der Laschen 1, 2 ausgebildet. In dem dargestellten Ausführungsbeispiel haben die Ausnehmungen 4, 5 eine im Wesentlichen dreieckförmige Kontur. Die Basis der dreieckförmigen Ausnehmung 4, 5 verläuft im Wesentlichen parallel zum unteren Rand der Lasche 1, 2. Die Ausnehmung erstreckt sich in die Lasche hinein.

Aus der Darstellung in der Fig. 2 ist des Weiteren ersichtlich, dass eine Ausnehmung in der Lasche 1 bzw. 2 vorgesehen ist, die auf der Innenseite 8, 9 ausgebildet ist. Die Ausnehmungen 10, 11 schließen sich an die Oberseite des Querstegs 3 an. Sie haben einen im Wesentlichen rechteckförmigen Querschnitt.

Durch die Ausnehmungen 4, 5, 10, 11 wird eine verringerte Fertigungstoleranz hinsichtlich der Rechtwinkligkeit zwischen den einzelnen Laschen 1, 2 und dem Quersteg 3 erreicht. Durch die Ausnehmungen 4, 5, 10 und 11 wird in vorteilhafter Weise erreicht, dass die lichte Breite innerhalb des Kettengliedes im Wesentlichen konstant ist.

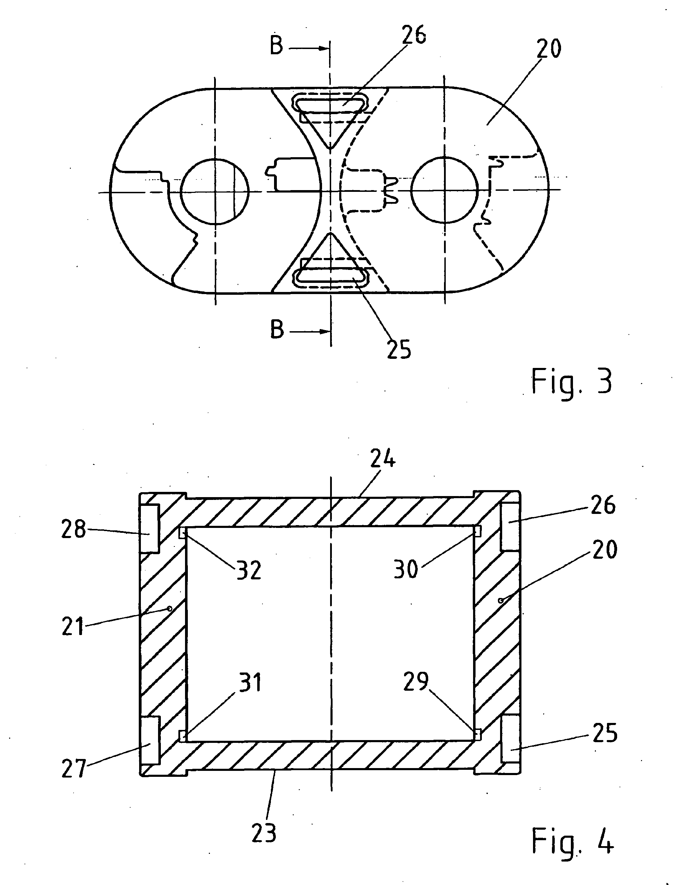

In den Figuren 3 und 4 ist ein zweites Ausführungsbeispiel eines Kettengliedes dargestellt. Bei dieser Ausführungsform eines Kettengliedes handelt es sich um ein geschlossenes Kettenglied. Es weist zwei parallel zueinander angeordnete Laschen 20, 21 auf, die durch die Querstege 23, 24 miteinander verbunden sind. Das Kettenglied ist einteilig aus wenigstens einem Kunststoff gebildet.

Der prinzipielle Aufbau des Kettengliedes entspricht dem Aufbau des Kettengliedes, wie es in den Fig. 1 und 2 dargestellt ist.

Das Kettenglied, wie es in den Figuren 3 und 4 dargestellt ist, weist in den Laschen 20, 21 Ausnehmungen 25, 26, 27, 28 auf. Die Ausnehmungen 25, 27 sind in dem jeweiligen Verbindungsbereich zwischen der Lasche 20 bzw. 21 und dem Quersteg 23 ausgebildet, während die Ausnehmungen 26, 28 in dem Verbindungsbereich zwischen den Laschen 20, 21 und dem Quersteg 24 vorgesehen sind. Die Ausnehmungen weisen eine im Wesentlichen dreieckförmige Gestalt auf. An der Innenseite der Laschen 20, 21 sind zusätzliche Ausnehmungen 29, 30, 31, 32 vorgesehen. Die Ausnehmungen weisen einen im Wesentlichen rechteckförmigen Querschnitt auf. Durch die Ausnehmungen wird eine Reduzierung des Materials im Verbindungsbereich erreicht, so dass während des Abkühlens des Kettengliedes nach einem Spritzvorgang, es nicht zu Veränderungen der jewünschten Querschnittgestalt des Kanals kommt, der durch die Laschen und die Querstege beschränkt wird.

### Bezugszeichenliste

- 1: Lasche
- 2: Lasche
- 3: Quersteg
- 4,5: Ausnehmung
- 6, 7: Außenseite
- 8, 9: Innenseite
- 10, 11: Ausnehmung
- 20, 21: Lasche
- 23,24,25: Quersteg
- 25, 26, 27, 28: Ausnehmung
- 29,30,31,32: Ausnehmung

## Patentansprüche

1. Kettenglied einer Energieführungskette zur Führung von Kabeln, Leitungen, Schläuchen und dergleichen zwischen einem ortsfesten und einem beweglichen Anschlußpunkt, wobei das Kettenglied einstückig aus wenigstens einem Kunststoff durch zwei beabstandet zueinander angeordnete Laschen und wenigstens einen über einen Verbindungsbereich die Laschen verbindenden Quersteg gebildet ist,
**dadurch gekennzeichnet, dass** wenigstens eine Lasche wenigstens eine Ausnehmung aufweist, welche in dem Verbindungsbereich ausgebildet ist, wobei die Ausnehmung im Verhältnis zur Laschendicke mindestens 30 % und höchstens 80 %, vorzugsweise 50 % beträgt.

2. Kettenglied nach Anspruch 1, **dadurch gekennzeichnet, dass** die wenigstens eine Ausnehmung in der Außenseite der wenigstens einen Lasche ausgebildet ist.

3. Kettenglied nach Anspruch 1 oder 2, **dadurch gekennzeichnet, dass** die wenigstens eine Ausnehmung in der Innenseite der wenigstens einen Lasche ausgebildet ist.

4. Kettenglied nach Anspruch 3, **dadurch gekennzeichnet, dass** die wenigstens eine Ausnehmung einen Rand aufweist, welcher den Verbindungsbereich wenigstens teilweise umgibt.

5. Kettenglied nach wenigstens einem der vorhergehenden Ansprüche 1 bis 4, **dadurch gekennzeichnet, dass** die Ausnehmung im wesentlichen dreieckförmig ausgebildet ist.

6. Kettenglied einer Energieführungskette zur Führung von Kabeln, Leitungen, Schläuchen und dergleichen zwischen einem ortsfesten und einem beweglichen Anschlußpunkt, wobei das Kettenglied einstückig aus wenigstens einem Kunststoff durch zwei beabstandet zueinander angeordnete Laschen und wenigstens einen über einen Verbindungsbereich die Laschen verbindenden Quersteg gebildet ist,
**dadurch gekennzeichnet, dass** wenigstens eine Lasche wenigstens einen Vorsprung aufweist, welcher auf der Außenseite der Lasche und im wesentlichen gegenüberliegend dem Quersteg ausgebildet ist, wobei das Verhältnis der Länge des Vorsprungs zur Laschendicke mindestens 20 % und höchstens 70 % beträgt.

7. Kettenglied nach Anspruch 6, dass der Vorsprung eine Länge aufweist, welche kleiner als die Länge des Querstegs ist.

## Claims

1. Chain link of a power transmission chain for guiding cables, lines, hoses and the like between a stationary and a moveable connection point, the chain link being formed in one piece from at least one plastic by means of two sideplates arranged spaced apart from one another and at least one crosspiece which connects the sideplates via a connecting area, **characterized in that** at least one sideplate has at least one cut-out which is constructed in the connecting area, the ratio of the cut-out to the sideplate thickness being at least 30% and at most 80%, preferably 50%.

2. Chain link according to Claim 1, **characterized in that** the at least one cut-out is constructed in the outer surface of the at least one sideplate.

3. Chain link according to Claim 1 or 2, **characterized in that** the at least one cut-out is constructed in the inner surface of the at least one sideplate.

4. Chain link according to Claim 3, **characterized in that** the at least one cut-out has a rim which at least partially surrounds the connecting area.

5. Chain link according to at least one of the preceding Claims 1 to 4, **characterized in that** the cut-out is constructed substantially in the shape of a triangle.

6. Chain link of a power transmission chain for guiding cables, lines, hoses and the like between a stationary and a moveable connection point, the chain link being formed in one piece from at least one plastic by means of two sideplates arranged spaced apart from one another and at least one crosspiece which connects the sideplates via a connecting area, **characterized in that** at least one sideplate has at least one projection which is constructed on the outer side of the sideplate and substantially opposite the crosspiece, the ratio of the length of the projection to the sidepiece thickness being at least 20% and at most 70%.

7. Chain link according to Claim 6, **characterized in that** the projection has a length which is smaller than the length of the crosspiece.

## Revendications

1. Maillon de chaîne pour une chaîne de transfert d'énergie destinée au guidage de câbles, conduites, tuyaux souples et analogues entre un point de raccordement fixe et un point de raccordement mobile, dans lequel le maillon de chaîne est formé d'une pièce en au moins une matière plastique par deux pattes disposées à distance l'une de l'autre et au moins une nervure transversale reliant les pattes par une zone de liaison, **caractérisé en ce qu'**au moins une patte présente au moins un évidement, qui est pratiqué dans la zone de liaison, dans lequel l'évidement vaut au minimum 30 % et au maximum 80 %, de préférence 50 %, par rapport à l'épaisseur des pattes.

2. Maillon de chaîne selon la revendication 1, **caractérisé en ce que** ledit au moins un évidement est pratiqué dans le côté extérieur de ladite au moins une patte.

3. Maillon de chaîne selon la revendication 1 ou 2, **caractérisé en ce que** ledit au moins un évidement est pratiqué dans le côté intérieur de ladite au moins une patte.

4. Maillon de chaîne selon la revendication 3, **caractérisé en ce que** ledit au moins un évidement présente un bord, qui entoure au moins en partie la zone de liaison.

5. Maillon de chaîne selon au moins une des revendications précédentes 1 à 4, **caractérisé en ce que** l'évidement est réalisé sous une forme essentiellement triangulaire.

6. Maillon de chaîne pour une chaîne de transfert d'énergie destinée au guidage de câbles, conduites, tuyaux souples et analogues entre un point de raccordement fixe et un point de raccordement mobile, dans lequel le maillon de chaîne est formé d'une pièce en au moins une matière plastique par deux pattes disposées à distance l'une de l'autre et au moins une nervure transversale reliant les pattes par une zone de liaison, **caractérisé en ce qu'**au moins une patte présente au moins une saillie, qui est réalisée sur le côté extérieur de la patte et essentiellement en face de la nervure transversale, dans lequel le rapport de la longueur de la saillie à l'épaisseur de la patte vaut au minimum 20 % et au maximum 70 %.

7. Maillon de chaîne selon la revendication 6, **caractérisé en ce que** la saillie présente une longueur qui est inférieure à la longueur de la nervure transversale.
